# EUROPEAN PATENT APPLICATION

(11) **EP 3 062 237 A1**
(43) Date of publication of application: **31.08.2016**
(21) Application number: 14856022.0
(22) Date of filing: 04.08.2014
(51) Int. Cl.: G06F 17/24

(54) **INFORMATION PROCESSING DEVICE, INFORMATION PROCESSING METHOD, AND PROGRAM**

(30) Priority: 24.10.2013 JP 2013221125
(71) Applicant: SONY CORPORATION, Minato-ku Tokyo 108-0075 (JP)
(72) Inventor: KAWANO, Shinichi, Tokyo 108-0075 (JP); SAWAI, Kunihito, Tokyo 108-0075 (JP); TAKAHASHI, Kei, Tokyo 108-0075 (JP); SAIJO, Nobuhiro, Tokyo 108-0075 (JP)
(74) Representative: MFG Patentanwälte Meyer-Wildhagen Meggle-Freund Gerhard PartG mbB
(86) International application number: PCT/JP2014/070510
(87) International publication number: WO 2015/059976

(57) **Abstract**

[Object] To propose an information processing device, information processing method, and program capable of allowing the user to easily edit an input text string.

[Solution] An information processing device includes a text segmentation unit configured to segment an input text string into a plurality of first portions of text, a text designation unit configured to designate a first portion of text to be selected by a user, of the plurality of first portions of text obtained by the segmentation, on the basis of the user's operation of inputting a direction of a movement for moving a pointing position on a display screen on which the text string is displayed, and a text editing unit configured to edit the designated first portion of text on the basis of input information input by the user.

## Description

### Technical Field

The present disclosure relates to information processing devices, information processing methods, and programs.

### Background Art

A variety of technologies for allowing the user to input or modify text on information apparatuses such as a mobile telephone, personal computer (PC) and the like have in recent years been developed. For example, technologies for recognizing the user's touch operations on a touchscreen and the user's speech in order to allow the user to input text have been developed.

For example, Patent Literature 1 describes a technique of, when the user inputs a modified string of characters, searching a string of characters that has already been input for a corresponding character string that is a string of characters corresponding to the modified character string, and replacing the corresponding character string with the modified character string in response to the user's input.

### Citation List

### Patent Literature

Patent Literature 1: JP H5-143593A

### Summary of Invention

### Technical Problem

However, in the above technique, it takes great time and effort for the user to edit a text string. For example, in the above technique, in order to designate a position of text to be modified from a text string, it is necessary for the user to move a cursor on a character-by-character basis, and point the leading character of the text to be modified. Thus, it takes great time and effort for the user to do such a task.

With the above in mind, the present disclosure proposes a novel and improved information processing device, information processing method, and program capable of allowing the user to easily edit an input text string.

### Solution to Problem

To solve the problem, according to an aspect of the present disclosure, there is provided An information processing device including: a text segmentation unit configured to segment an input text string into a plurality of first portions of text; a text designation unit configured to designate a first portion of text to be selected by a user, of the plurality of first portions of text obtained by the segmentation, on the basis of the user's operation of inputting a direction of a movement for moving a pointing position on a display screen on which the text string is displayed; and a text editing unit configured to edit the designated first portion of text on the basis of input information input by the user.

To solve the problem, according to another aspect of the present disclosure, there is provided an information processing method including: segmenting an input text string into a plurality of first portions of text; designating a first portion of text to be selected by a user, of the plurality of first portions of text obtained by the segmentation, on the basis of the user's operation of inputting a direction of a movement for moving a pointing position on a display screen on which the text string is displayed; and editing, by a processor, the designated first portion of text on the basis of input information input by the user.

To solve the problem, according to another aspect of the present disclosure, there is provided a program for causing a computer to function as: a text segmentation unit configured to segment an input text string into a plurality of first portions of text; a text designation unit configured to designate a first portion of text to be selected by a user, of the plurality of first portions of text obtained by the segmentation, on the basis of the user's operation of inputting a direction of a movement for moving a pointing position on a display screen on which the text string is displayed; and a text editing unit configured to edit the designated first portion of text on the basis of input information input by the user.

### Advantageous Effects of Invention

As described above, according to the present disclosure, the user can easily edit an input text string. Note that the effects described above are not necessarily limited, and along with or instead of the effects, any effect that is described in the present specification may be exhibited.

### Brief Description of Drawings

[FIG. 1] FIG. 1 is an illustrative diagram showing an example of an input text string.
[FIG. 2] FIG. 2 is an illustrative diagram showing an example of an input text string.
[FIG. 3] FIG. 3 is an illustrative diagram showing a basic configuration of an information processing system according to a first embodiment of the present disclosure.
[FIG. 4] FIG. 4 is an illustrative diagram showing a hardware configuration of an information processing device 10 according to the first embodiment.
[FIG. 5] FIG. 5 is an illustrative diagram showing an example of an external appearance of a controller 20 according to the first embodiment.
[FIG. 6] FIG. 6 is an illustrative diagram showing an example of an external appearance of a controller 20 according to the first embodiment.
[FIG. 7] FIG. 7 is a functional block diagram showing a configuration of a controller 20 according to the first embodiment.
[FIG. 8] FIG. 8 is a functional block diagram showing a configuration of an information processing device 10 according to the first embodiment.
[FIG. 9] FIG. 9 is an illustrative diagram showing an example of designation of a selected text candidate according to the first embodiment.
[FIG. 10] FIG. 10 is an illustrative diagram showing an example of movement of a cursor by the user's operation according to the first embodiment.
[FIG. 11] FIG. 11 is an illustrative diagram showing an example of movement of a cursor by the user's operation according to the first embodiment.
[FIG. 12] FIG. 12 is an illustrative diagram showing an example of modification of selected text according to the first embodiment.
[FIG. 13] FIG. 13 is an illustrative diagram showing an example of deletion of selected text according to the first embodiment.
[FIG. 14] FIG. 14 is an illustrative diagram showing an example of simplification of selected text according to the first embodiment.
[FIG. 15] FIG. 15 is an illustrative diagram showing an example of addition of text according to the first embodiment.
[FIG. 16] FIG. 16 is an illustrative diagram showing an example of addition of text according to the first embodiment.
[FIG. 17] FIG. 17 is a flowchart showing a first operation example according to the first embodiment.
[FIG. 18] FIG. 18 is a flowchart showing an operation of a "select/modify process" in the first operation example.
[FIG. 19] FIG. 19 is a flowchart showing an operation of a "delete/change-form process" in the first operation example.
[FIG. 20] FIG. 20 is a flowchart showing a portion of a second operation example according to the first embodiment.
[FIG. 21] FIG. 21 is a flowchart showing a portion of a second operation example according to the first embodiment.
[FIG. 22] FIG. 22 is a flowchart showing an operation of a "change-form/add process" in the second operation example.
[FIG. 23] FIG. 23 is a flowchart showing an operation of a "modify/add process" in the second operation example.
[FIG. 24] FIG. 24 is an illustrative diagram showing a basic configuration of an information processing system according to a second embodiment of the present disclosure.
[FIG. 25] FIG. 25 is a functional block diagram showing a configuration of a television set 60 according to the second embodiment.
[FIG. 26] FIG. 26 is an illustrative diagram showing an example of a method for determining the direction of a line of sight according to the second embodiment.
[FIG. 27] FIG. 27 is a flowchart showing a portion of an operation example according to the second embodiment.
[FIG. 28] FIG. 28 is a flowchart showing a portion of an operation example according to the second embodiment.

### Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

Also, in the present specification and the accompanying drawings, elements having substantially the same functional configuration may be distinguished from each other by different alphabetical letters added to the end of the same reference sign. For example, a plurality of elements having substantially the same functional configuration are distinguished from each other when necessary, like a display screen 40a and a display screen 40b. Note that when a plurality of elements having substantially the same functional configuration do not have to be particularly distinguished from each other, these elements are indicated only by the same reference sign. For example, when the display screen 40a and the display screen 40b do not have to be particularly distinguished from each other, these display screens are simply referred to as display screens 40.

Also, the "Description of Embodiments" will be described in the following item order.
1. Background
2. Detailed Description Of Embodiments
   2-1. First Embodiment
   2-2. Second Embodiment
3. Variations

### <<1. Background>>

The present disclosure may be implemented in various forms as described in detail by way of example in "2. Detailed Description Of Embodiments." Firstly, in order to clearly indicate features of the present disclosure, the background to the development of the information processing device of the present disclosure will be described.

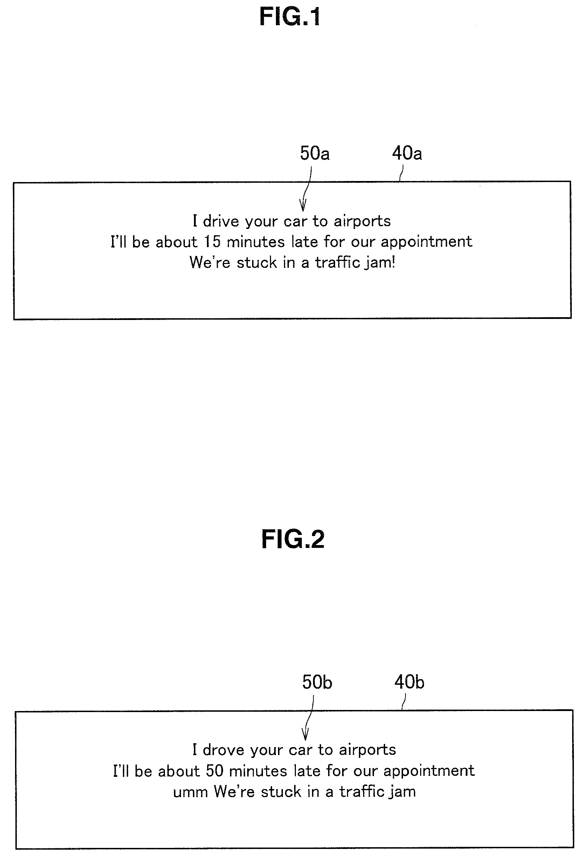

FIG. 1 shows an example (text string 50a) in which a text string 50 input by the user is shown on a display screen 40. The text string 50a is an example that has been input exactly as intended by the user.

Also, FIG. 2 shows an example in which when the user has tried to input the text string 50a shown in FIG. 1 using their voice, a text string 50b that is different from what is intended by the user has been actually input due to, for example, a recognition error in speech recognition or the like, and is displayed on the display screen 40. As shown in FIG. 2, in the text string 50b, for example, the word "drove" is erroneously input as "drive", and the word "50" is erroneously written as "15", and an unnecessary word "umm" is erroneously input.

As described above, when the user inputs text using a speech recognition function, text that is different from what is intended by the user may be input due to, for example, a recognition error in speech recognition or the like. Alternatively, even when text is input as intended by the user, the user may desire to modify a portion of the text string after inputting.

When the above circumstances in mind, the information processing device of the present disclosure has been made. The information processing device according to the present disclosure allows the user to easily edit an input text string. Embodiments of the present disclosure will now be described in detail.

### «2. Detailed Description Of Embodiments»

### <2-1. First Embodiment>

### (2-1-1. Basic Configuration)

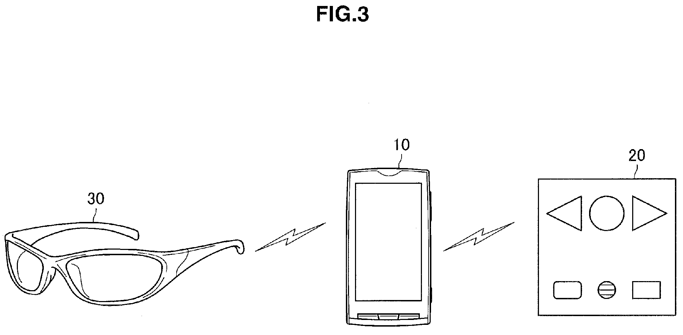

Next, a first embodiment will be described. Firstly, a basic configuration of an information processing system according to the first embodiment will be described with reference to FIG. 3. As shown in FIG. 3, the information processing system according to the first embodiment includes an information processing device 10, a controller 20, and a display device 30.

### (2-1-1-1. Information Processing Device 10)

The information processing device 10 is an example of the information processing device according to the present disclosure. Software for editing text during use of an application or web service, such as, for example, a memo, electronic mail, blog, or the like, can be installed to the information processing device 10.

Also, the information processing device 10 can have a function of recognizing speech picked up by, for example, a microphone 202 or the like described below which is included in the controller 20. Moreover, the information processing device 10 can convert recognized speech into a text string, and thereafter, display the text string on the display screen 40.

The information processing device 10 may be, for example, a mobile telephone, such as a smartphone or the like, PC, server apparatus, tablet terminal, personal digital assistant (PDA), television set, digital camera, or the like.

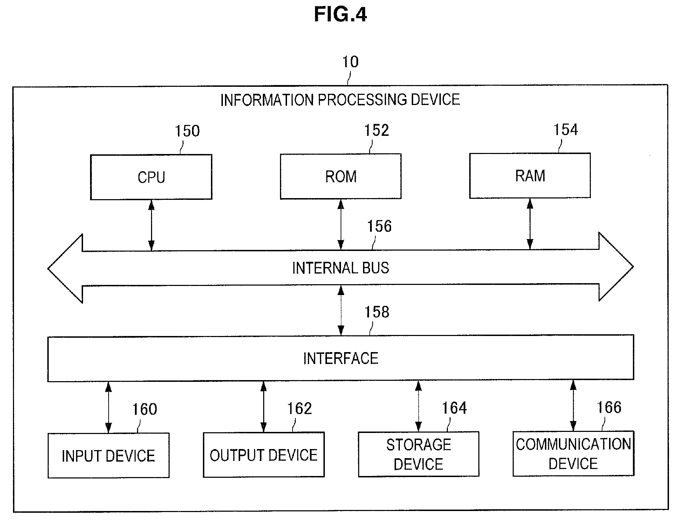

Note that the information processing device 10 has, for example, a hardware configuration shown in FIG. 4. As shown in FIG. 4, the information processing device 10 includes a central processing unit (CPU) 150, a read only memory (ROM) 152, a random access memory (RAM) 154, an internal bus 156, an interface 158, an input device 160, an output device 162, a storage device 164, and a communication device 166.

### - CPU 150 -

The CPU 150, which includes, for example, various processing circuits and the like, functions as a control unit 100 that controls the entire information processing device 10. Also, the CPU 150 provides, in the information processing device 10, the functions of, for example, a speech recognition unit 102, a text segmentation unit 104, a text designation unit 106, a text editing unit 108, a display control unit 110, and a text addition unit 112 described below.

### - ROM 152 -

The ROM 152 stores, for example, control data, such as programs, calculation parameters, and the like, that are used by the CPU 150.

### - RAM 154 -

The RAM 154 temporarily stores, for example, a program executed by the CPU 150.

### - Interface 158 -

The interface 158 connects the input device 160, the output device 162, the storage device 164, and the communication device 166 to the internal bus 156. For example, the input device 160 exchanges data with the CPU 150 and the like through the interface 158 and the internal bus 156.

### - Input Device 160 -

The input device 160 includes an input means for allowing the user to input information, such as, for example, a touchscreen, button, microphone, switch, or the like, an input control circuit for generating an input signal on the basis of the user's input, and outputting the input signal to the CPU 150, and the like.

### - Output Device 162 -

The output device 162 includes a display device, such as, for example, a liquid crystal display (LCD) device, organic light emitting diode (OLED) device, lamp, or the like. The display device displays a captured image, a generated image, or the like.

Moreover, the output device 162 includes a speech output device, such as a speaker or the like. The speech output device converts speech data or the like into a speech, and outputs the speech.

### - Storage Device 164 -

The storage device 164 is a data storing device that stores, for example, programs executed by the CPU 150 and various items of data. The storage device 164 includes, for example, a storage medium, a recording device that records data to the storage medium, a reading device that reads data from the storage medium, a deletion device that deletes data recorded in the storage medium, and the like.

### - Communication Device 166 -

The communication device 166 is a communication interface including, for example, a communication device for connecting to a communication network, such as, for example, a public network, the Internet, or the like. Also, the communication device 166 may be a wireless LAN compatible communication device, a long term evolution (LTE) compatible communication device, or a wire communication device that performs wired communication. The communication device 166 may function as, for example, a communication unit 120 described below.

Note that the hardware configuration of the information processing device 10 is not limited to the above configuration. For example, the information processing device 10 may not include at least one of the input device 160, the output device 162, or the storage device 164.

### (2-1-1-2. Controller 20)

### - Basic Configuration -

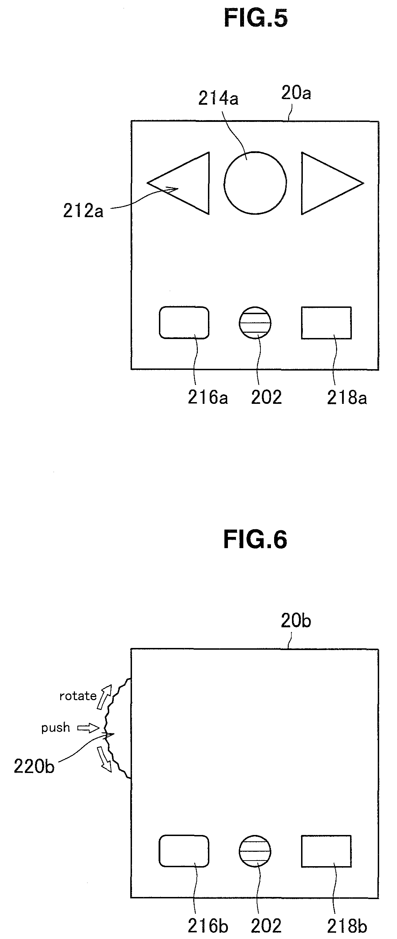

The controller 20 is a device that is used by the user to edit a text string 50 displayed on the display screen 40. FIG. 5 is an illustrative diagram showing an example (controller 20a) of an external appearance of the controller 20. As shown in FIG. 5, the controller 20a includes, for example, a microphone 202, direction keys 212, a decision key 214, a speech input key 216, and a BACK key 218. Here, the microphone 202 is a device for picking up speech. Also, the direction keys 212 are a key that is used by the user to move a pointing position displayed on the display screen 40. Note that the pointing position is a display for showing a position or range designated by the user, such as, for example, a cursor displayed on the display screen 40, or the like. In the description that follows, an example in which the pointing position is the position of a cursor displayed on the display screen 40 will be mainly described.

Also, the decision key 214 is, for example, a key that is used by the user to decide selection. Also, the speech input key 216 is a key that is used by the user to input their speech into the microphone 202. Also, the BACK key 218 is a key that is used by the user to input in order to switch operation screens, operation modes, or the like, such as, for example, returning from a text editing screen to a menu screen displayed on the display screen 40, or the like.

Although FIG. 5 shows an example in which the direction keys 212 are keys for choosing the right and left directions, the present disclosure is not limited to this example. For example, the direction keys 212 may further include keys for choosing the upward and downward directions, or may be a circular key.

FIG. 6 is an illustrative diagram showing another example (controller 20b) of an external appearance of the controller 20. As shown in FIG. 6, the controller 20b is different from the controller 20a shown in FIG. 5 in that the former includes a rotational key 220 instead of the direction keys 212 and the decision key 214. The rotational key 220 is a key that has the functions of both the direction keys 212 and the decision key 214. As shown in FIG. 6, the rotational key 220 is pressed down by the user toward the inside of the controller 20b so that a signal indicating that a decision operation has been made by the user is generated. Also, the rotational key 220 is rotated by the user in, for example, the upward and downward directions so that a signal indicating that an operation for moving the position of the cursor displayed on the display screen 40 is generated.

### - Configuration -

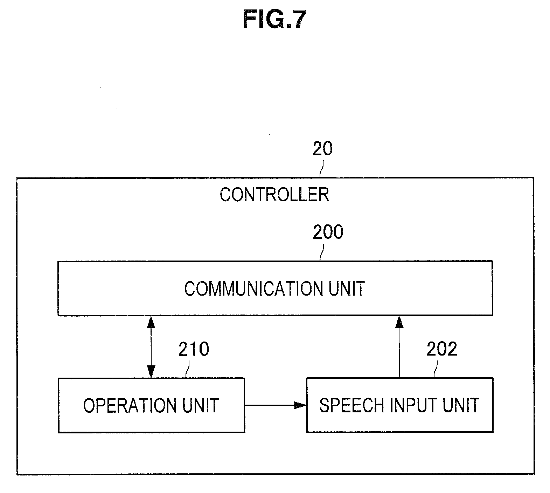

Also, FIG. 7 is a functional block diagram showing an internal configuration of the controller 20. As shown in FIG. 7, the controller 20 has a communication unit 200, a speech input unit 202, and an operation unit 210.

The communication unit 200 transmits and receives information to and from an apparatus that is located within a range that allows the apparatus to communicate with the controller 20, using a communication device (not shown) included in the controller 20, through wireless communication complying with a standard, such as, for example, Bluetooth or the like. For example, the communication unit 200 transmits, to the information processing device 10, a choice between the directions of a movement of the cursor that has been received by the operation unit 210 described below, speech data that has been received by the speech input unit 202, or the like.

The speech input unit 202 includes a microphone 202 or the like. The speech input unit 202 picks up external speech when the speech input key 216 is pressed down by the user, for example. The user can input their speech into the controller 20 using the speech input unit 202.

The operation unit 210 includes, for example, a direction key 212, a decision key 214, a speech input key 216, a BACK key 218, a rotational key 220, or the like. The operation unit 210 receives the user's input for choosing the direction of a movement of the cursor on the display screen 40, the user's input for deciding to do what is displayed on the display screen 40, or the like.

### (2-1-1-3. Display Device 30)

The display device 30 is a display for displaying the display screen 40. The display device 30 has, for example, a liquid crystal display or an OLED display. Although FIG. 3 shows an example in which the display device 30 is a device having a glasses-type display, the present disclosure is not limited to this example. For example, the display device 30 may be a head mounted display (HMD), television set, wristwatch-type computer, game machine, or the like.

Note that the information processing system according to the first embodiment is not limited to the above configuration. For example, when the output device 162 has the function of the display device 30, the information processing device 10 and the display device 30 may be integrated together.

### (2-1-2. Configuration)

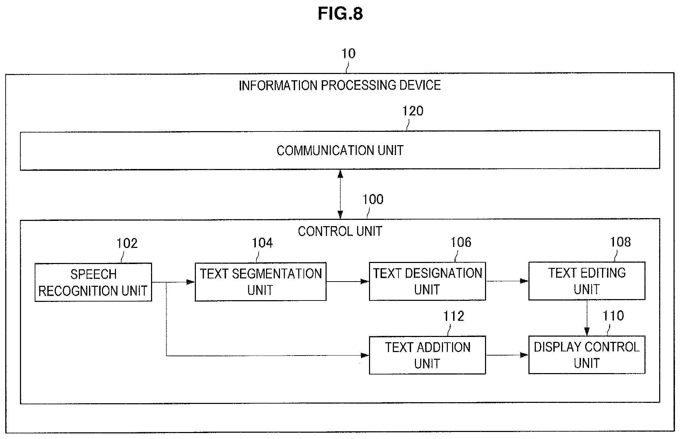

In the foregoing, a basic configuration of the information processing system according to the first embodiment has been described. Next, a configuration of the information processing device 10 according to the first embodiment will be described in detail. FIG. 8 is a functional block diagram showing a configuration of the information processing device 10. As shown in FIG. 8, the information processing device 10 has a control unit 100 and a communication unit 120.

### (2-1-2-1. Control Unit 100)

The control unit 100 controls all operations of the information processing device 10 using a hardware configuration including the CPU 150, the RAM 154, and the like included in the information processing device 10. Also, as shown in FIG. 8, the control unit 100 includes a speech recognition unit 102, a text segmentation unit 104, a text designation unit 106, a text editing unit 108, a display control unit 110, and a text addition unit 112.

### (2-1-2-2. Speech Recognition Unit 102)

The speech recognition unit 102 recognizes speech data received by the communication unit 120 described below from the controller 20 using a speech recognition technique, such as, for example, a hidden Markov model or the like. Also, the speech recognition unit 102 converts the recognized speech into text data.

### (2-1-2-3. Text Segmentation Unit 104)

The text segmentation unit 104 segments a text string input by the user into a plurality of selected text candidates. Here, a text string is, for example, text data recognized by the speech recognition unit 102. Alternatively, a text string may be a string of characters continuously typed by the user using, for example, a keyboard, a string of characters recognized by handwriting recognition, or the like.

A selected text candidate is an example of a first portion of text in the present disclosure. For example, when a text string is written in a language where words are delimited, such as English, French, German, or the like, a selected text candidate may be a single word unit or a combination of multiple words. Also, when a text string is written in a language where words are not delimited, such as Japanese, Chinese, Korean, or the like, a selected text candidate may be a morpheme unit obtained by performing morpheme analysis on a text string, or may be a combination (bunsetsu (in Japanese) unit of a jiritsugo (a part of speech in Japanese) and a fuzokugo (a part of speech in Japanese). Alternatively, a selected text candidate may be a character string unit having a predetermined number of characters for segmentation, or may be a sentence unit that is input using voice.

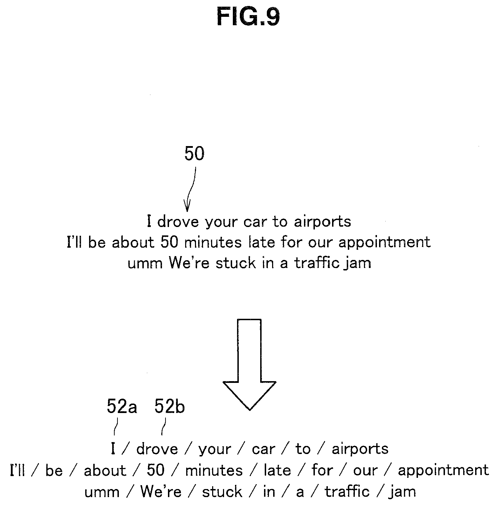

Here, the function of the above text segmentation unit 104 will be described in greater detail with reference to FIG. 9. FIG. 9 is an illustrative diagram showing an example in which the text string 50 shown in FIG. 2 is segmented by the text segmentation unit 104 into a plurality of selected text candidates. As shown in FIG. 9, the text segmentation unit 104 can segment the text string 50 into a plurality of selected text candidates using spaces contained in the text string 50 as a delimiter, where, for example, the first selected text candidate 52a is "I", and the second selected text candidate 52b is "drove".

Also, in a variation, the text segmentation unit 104 can segment a text string into a plurality of selected text candidates on the basis of the context of the input text string. For example, the text segmentation unit 104 calculates the likelihood of concatenation of each word contained in a text string with a preceding or following word by referring to dictionary data previously stored, and thereby separates a combination of one or more words that is determined to be a single meaningful group, as a selected text candidate. In the example of the text string 50 shown in FIG. 1, the text segmentation unit 104 does not separate "your" and "car" in the first sentence into different selected text candidates, and can determine that "your car" is a single selected text candidate.

### (2-1-2-4. Text Designation Unit 106)

The text designation unit 106 designates text to be selected by the user (also hereinafter referred to as "selected text") from the plurality of selected text candidates obtained by segmentation performed by the text segmentation unit 104, according to the user's operation for inputting the direction of a movement for moving the position of the cursor on the display screen 40. Here, the operation for inputting the direction of a movement is, for example, the user's pressing down of the direction keys 212 of the controller 20, the user's operation of the rotational key 220, or the like.

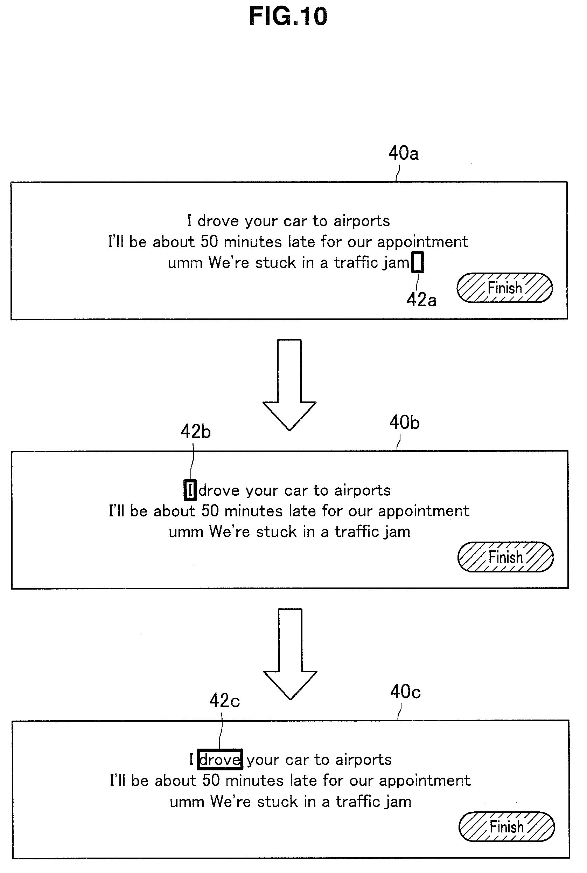

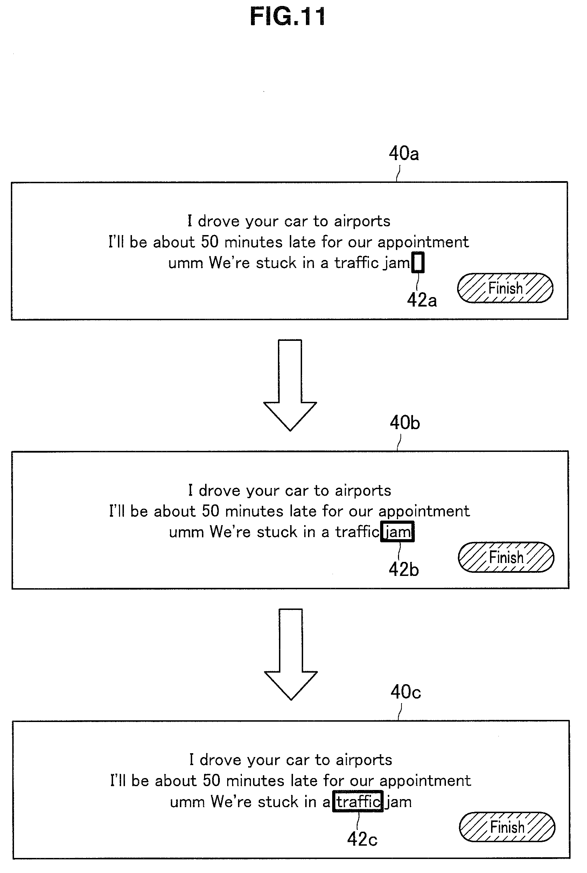

Here, the above function will be described in greater detail with reference to FIG. 10 or FIG. 11. FIG. 10 or FIG. 11 is an illustrative diagram showing an example in which the position of the cursor 42 is moved on the display screen 40 according to the user's input operation. For example, when the user performs a rightward movement operation once by, for example, pressing down a rightward key 212a shown in FIG. 5, the display control unit 110 described below moves the position of the cursor 42 rightward over one selected text candidate from the cursor 42a to the cursor 42b as shown in the middle diagram in FIG. 10. Thereafter, the text designation unit 106 designates a selected text candidate corresponding to the position of the cursor 42b after the movement, i.e., "I" as selected text.

Also, when the user performs a rightward movement operation again or continues a rightward movement operation for at least a predetermined period of time, the display control unit 110 further moves the position of the cursor 42 rightward over one selected text from the cursor 42b to the cursor 42c as shown in the bottom diagram in FIG. 10. Thereafter, the text designation unit 106 designates a selected text candidate corresponding to the position of the cursor 42c after the movement, i.e., "drove" as selected text.

Also, FIG. 11 is an illustrative diagram showing an example in which the position of the cursor 42 on the display screen 40 is moved leftward by the user. As shown in the middle diagram in FIG. 11, when the user performs an operation for moving the cursor position leftward, the text designation unit 106 designates a selected text candidate corresponding to the position of the cursor 42b after the movement, i.e., "jam" as selected text. Also, as shown in the bottom diagram in FIG. 11, when the user performs an operation for further moving the cursor position leftward, the text designation unit 106 designates a selected text candidate corresponding to the position of the cursor 42c after the movement, i.e., "traffic" as selected text.

According to these specific examples, the user can move the cursor on a selected text candidate-by-selected text candidate basis by choosing between the directions of a movement of the cursor by operating the controller 20, and thereby designate a selected text candidate that the user desires to modify. Therefore, the user can designate a string of characters that the user desires to modify, with less time and effort.

### (2-1-2-5. Text Editing Unit 108)

The text editing unit 108 edits selected text designated by the text designation unit 106 on the basis of input information input by the user.

### - Editing Example 1 (Modification By Overwriting) -

For example, the text editing unit 108, when the user inputs modified text, can replace selected text designated by the text designation unit 106 with the modified text in a text string. Here, modified text is an example of second text in the present disclosure. Note that modified text may be, for example, text data obtained by the speech recognition unit 102 recognizing speech input by the user into the speech input unit 202 of the controller 20. Alternatively, modified text may be a string of characters input by the user through a keyboard, software keyboard, or the like.

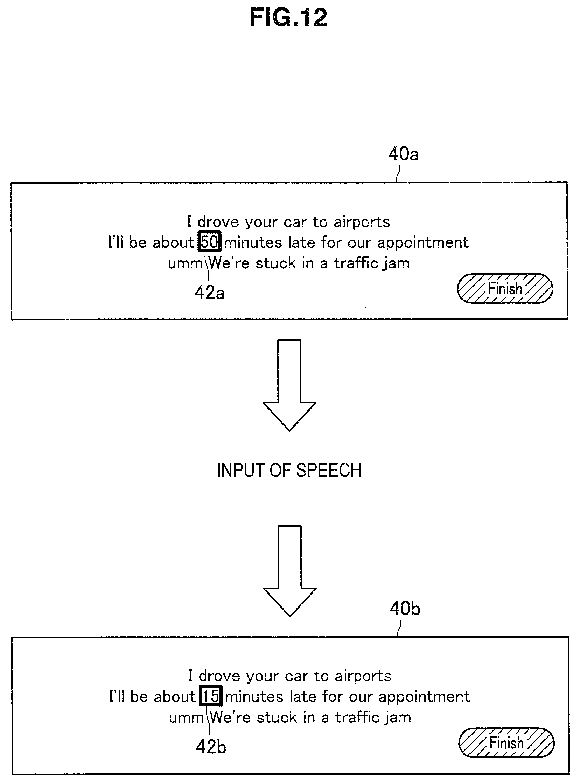

Here, the function of the above text editing unit 108 will be described in greater detail with reference to FIG. 12. FIG. 12 is an illustrative diagram showing an example in which selected text contained in a text string displayed on the display screen 40 is replaced with modified text according to the user's input operation. As shown in FIG. 12, for example, when modified text ("15") is input by the user inputting their speech into the controller 20, the text editing unit 108 replaces selected text corresponding to the position of the cursor 42, i.e., "50" with "15".

According to this editing example 1, after designating a selected text candidate that the user desires to modify, the user can modify the selected text candidate into a desired string of characters (modified text) by, for example, inputting their speech into the speech input unit 202. Therefore, the user can easily modify a text string.

### - Editing Example 2 (Deletion) -

Also, in an editing example 2, when deletion instruction information for deleting text is input by the user, the text editing unit 108 can delete a selected text designated by the text designation unit 106 from a text string.

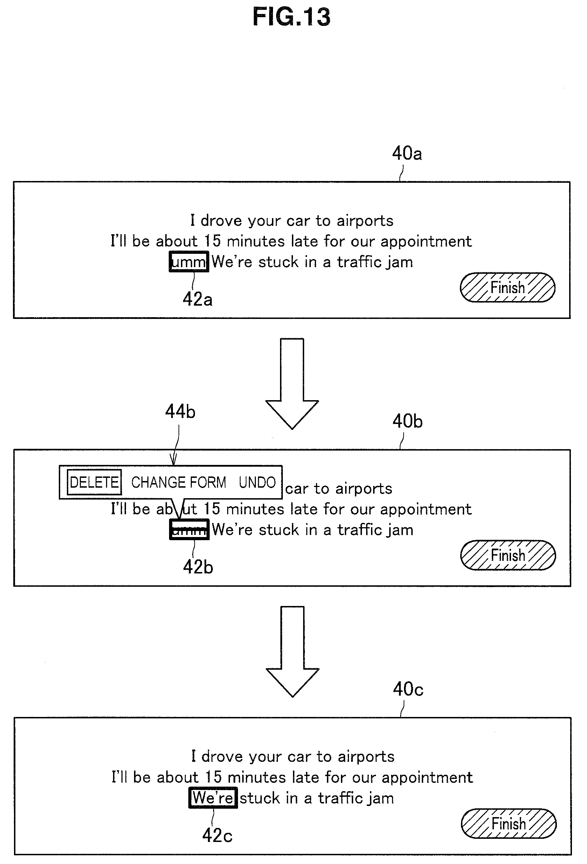

Here, the above function will be described in greater detail with reference to FIG. 13. FIG. 13 is an illustrative diagram showing an example in which selected text contained in a text string displayed on the display screen 40 is deleted according to the user's input operation. As shown in the middle diagram in FIG. 13, when the cursor is moved to the position of a selected text candidate that the user desires to delete, and a decision operation is performed with respect to the operation unit 210 of the controller 20, initially, the display control unit 110 causes the display screen 40 to display a function selection image 44. The function selection image 44 is an image for causing the user to select the effect of editing of selected text. When the user selects a "delete" function in the function selection image 44, the text editing unit 108 deletes selected text corresponding to the position of the cursor 42b, i.e., "umm" from the text string as shown in the bottom diagram in FIG.. 13.

Note that when, as shown in the middle diagram in FIG. 13, the cursor is located on a display "DELETE" before the "delete" function is confirmed in the function selection image 44, the display control unit 110 can cause the display screen 40 to display a display for emphasizing selected text, such as, for example, a horizontal line or the like, on selected text ("umm") corresponding to the position of the cursor 42b. According to this display example, before confirming the "delete" function, the user can certainly recognize that if the user performs a decision operation, selected text will be deleted. Therefore, human errors, such as the user's erroneous deletion of selected text, can be significantly reduced.

### - Editing Example 3 (Simplification) -

Also, as an editing example 3, for example, when a text string is written in the English language, and the user inputs conversion instruction information for converting a word into the infinitive form, the text editing unit 108 can replace selected text designated by the text designation unit 106 with text that is a simplified version of the selected text. Here, simplification of selected text means that, for example, when the selected text is a verb, the selected text is converted from the past form or the past participle form into the present form, for example. Alternatively, simplification of selected text means that, for example, when selected text is a noun, the selected text is converted from the plural form into the singular form.

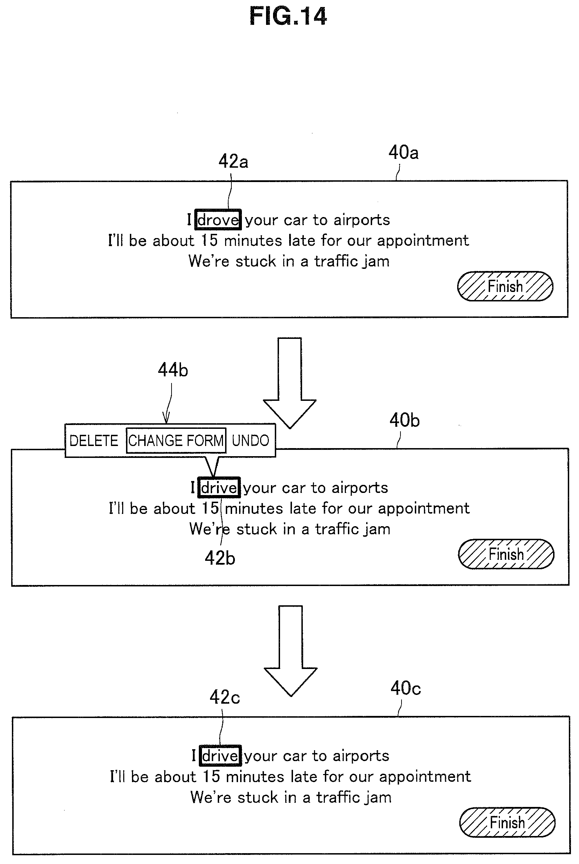

Here, the editing example 3 will be described in greater detail with reference to FIG. 14. FIG. 14 is an illustrative diagram showing an example in which selected text contained in a text string displayed on the display screen 40 is converted into the infinitive form of the selected text according to the user's input operation. When the user selects a "change form" function in the function selection image 44 displayed on the display screen 40 as shown in the middle figure of FIG. 14, the text editing unit 108 replaces a selected text candidate corresponding to the position of the cursor 42, i.e., "drove" with "drive", which is the infinitive form of "drove" as shown in the bottom diagram in FIG. 14.

Note that when, in a variation, a text string is written in the Japanese language, and the user inputs conversion instruction information for converting kanji into hiragana, the text editing unit 108 can replace selected text designated by the text designation unit 106 with text that is obtained by converting the selected text into hiragana.

In general, in the case of, for example, a homophone, a word that sounds like another word, or the like, it is difficult for speech recognition techniques to modify text as intended by the user even if the user tries to input such a word again using different pronunciations. Meanwhile, according to the editing example 3, advantageously, selected text is converted into simpler text, and therefore, can be replaced with text that substantially expresses what is intended by the user. For example, when the user tries to input the word "began" using their voice, and that word is recognized as "begun" by speech recognition, the text editing unit 108 converts "begun" into "begin", which is the infinitive form of "begun". Thus, text can be replaced with another text that substantially expresses what is intended by the user.

### (2-1-2-6. Display Control Unit 110)

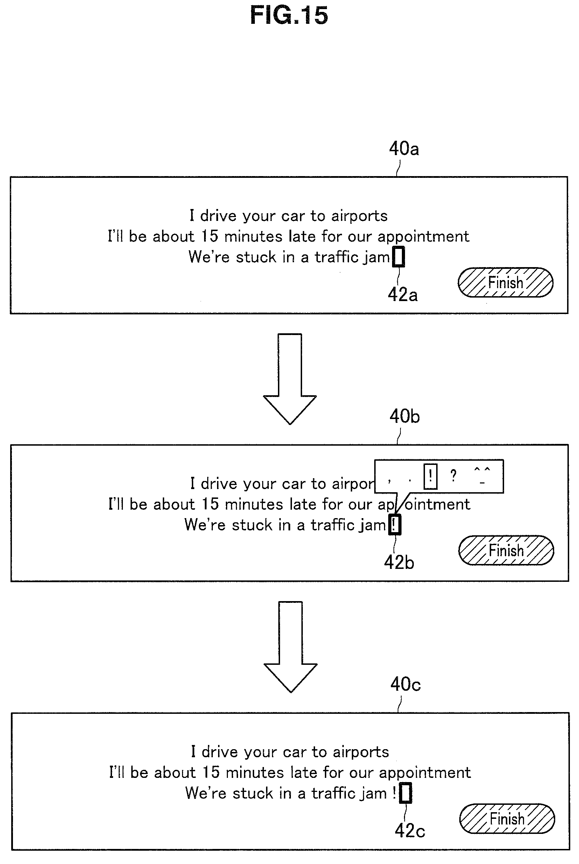

The display control unit 110 causes the display screen 40 to display various display images, a text string input by the user, or the like. For example, as shown in FIG. 15, when the cursor is located at the tail end of a text string, and a predetermined operation, such as, for example, a decision operation or the like, is performed, the display control unit 110 causes the display screen 40 to display a symbol selection image. Note that the symbol selection image is an image for allowing the user to select one or more symbols, which is an example of a selection image in the present disclosure.

### (2-1-2-7. Text Addition Unit 112)

The text addition unit 112 adds a second text string to the tail end of a text string according to the user's input operation. Here, the second text string is, for example, a symbol that is selected by the user in the symbol selection image displayed on the display screen 40. Alternatively, the second text string may be text data recognized by the speech recognition unit 102, or may be a string of characters input through a keyboard, software keyboard, or the like.

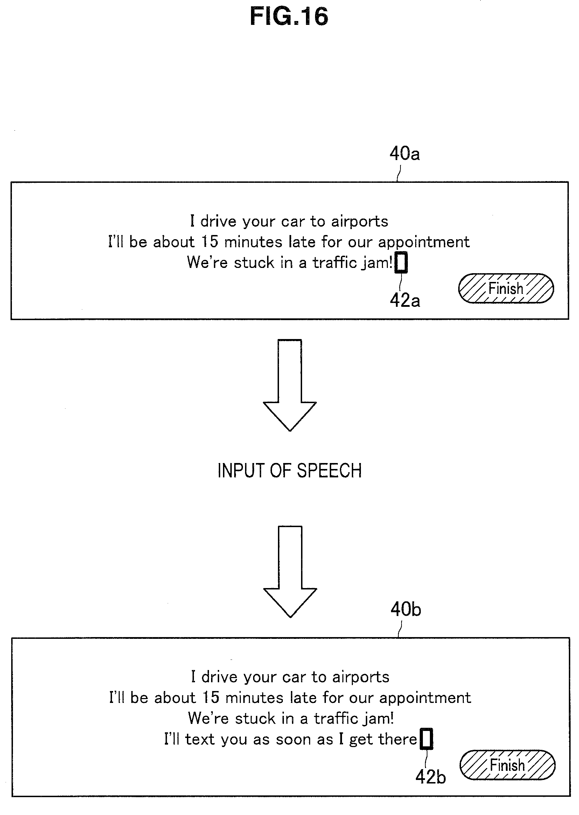

Here, the above function will be described in greater detail with reference to FIG. 15 or FIG. 16. FIG. 15 is an illustrative diagram showing an example in which a symbol is added to the tail end of a text string displayed on the display screen 40 according to the user's input operation. As shown in the middle diagram in FIG. 15, when the cursor is located at the tail end of a text string, and a decision operation is performed with respect to the operation unit 210 of the controller 20, initially, the display control unit 110 causes the display screen 40 to display the symbol selection image. Thereafter, when any symbol is selected by the user in the symbol selection image, the text addition unit 112 adds the selected symbol to the tail end of the text string. Note that the example shown in FIG. 15 shows an example in which "!" is selected by the user, and is then added to the tail end of the text string.

According to this addition example, even in the case of a character (or a string of characters) that is not easily recognized by speech recognition, such as, for example, "!" or "?", the user can select a desired character from the symbol selection image and thereby easily add the selected character to a text string. Also, in the case of a language in which an affirmative sentence and an interrogative sentence may have the same text in speech, such as, for example, Japanese, if the user adds "?" to the tail end of a sentence, the reader can certainly understand that the sentence is an interrogative sentence, which is a significant advantage.

FIG. 16 is an illustrative diagram showing an example in which text data based on the user's speech input is added to the tail end of a text string displayed on the display screen 40. As shown in FIG. 16, when the cursor is located at the tail end of a text string, and the user enters an additional speech input, initially, the speech recognition unit 102 recognizes the additionally input speech. Thereafter, as shown in the bottom diagram in FIG. 16, the text addition unit 112 adds a text string recognized by the speech recognition unit 102 to the tail end of the text string displayed on the display screen 40. Note that the example shown in FIG. 16 shows an example in which the user inputs a text string "I'll text you as soon as I get there" using their voice, and the input text string is then added to the tail end of the text string displayed on the display screen 40.

### (2-1-2-7. Communication Unit 120)

The communication unit 120 transmits and receives information to and from various apparatuses that can communicate with the information processing device 10 via, for example, wireless communication. For example, the communication unit 120 receives, from the controller 20, information indicating a choice between the directions of a movement of the cursor input by the user, speech data input into the speech input unit 202, or the like.

Note that the configuration of the information processing device 10 according to the first embodiment is not limited to the above configuration. For example, the communication unit 120 may not be included in the information processing device 10, and may be included in other apparatuses.

### (2-1-3. Operations)

In the foregoing, a configuration according to the first embodiment has been described. Next, operations according to the first embodiment will be described. Here, two operation examples, i.e., an "operation example 1" and an "operation example 2" will be described. Note that both the "operation example 1" and the "operation example 2" are an example of an operation that is performed in a situation that the user inputs text using speech recognition, and modifies the recognized text.

### (2-1-3-1. Operation Example 1)

### - General Operation -

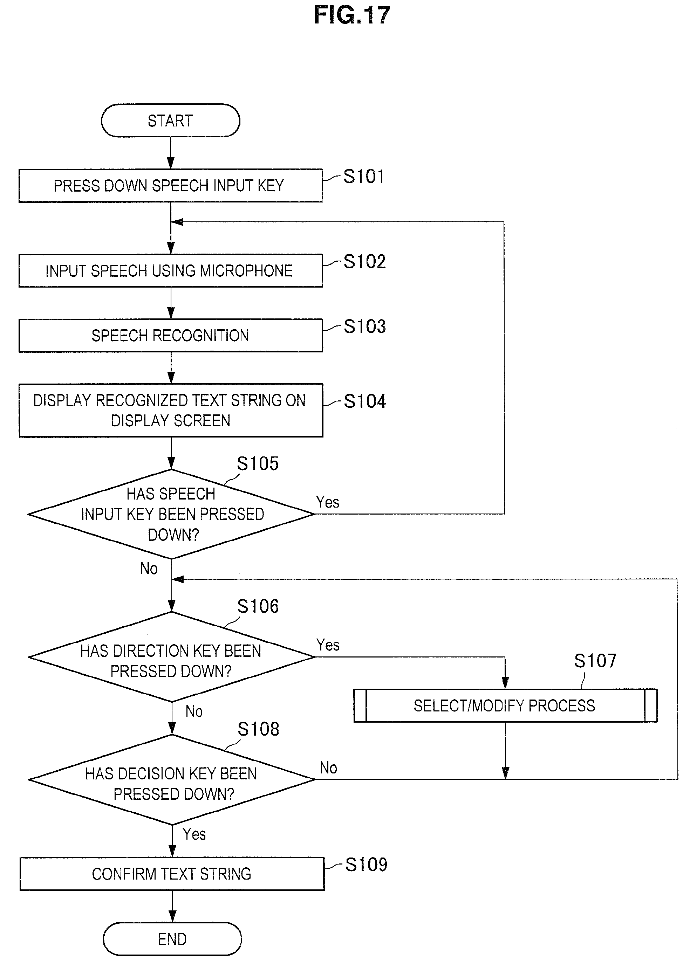

Firstly, the operation example 1 will be described. FIG. 17 is a flowchart showing a general operation according to the operation example 1. As shown in FIG. 17, initially, the user presses down the speech input key 216 of the controller 20 (S101).

Next, the user inputs their speech into the speech input unit 202. Thereafter, the communication unit 200 transmits input speech data to the information processing device 10 (S102).

Next, the speech recognition unit 102 of the information processing device 10 recognizes the speech data received from the controller 20 using a speech recognition technique. Thereafter, the text segmentation unit 104 segments a text string recognized by the speech recognition unit 102 into a plurality of selected text candidates (S103).

Next, the display control unit 110 causes the communication unit 120 to transmit, to the display device 30, control information for causing the display screen 40 to display the text string recognized by the speech recognition unit 102. Thereafter, the display device 30 displays the text string on the display screen 40 on the basis of the control information received from the information processing device 10 (S104).

Next, the control unit 100 monitors the state of reception performed by the communication unit 120, and thereafter, determines whether the user has newly pressed down the speech input key 216 (S105). If it is determined that the speech input key 216 has been pressed down (S105: Yes), the information processing device 10 performs the operation of S102 again.

Meanwhile, when it is determined that the speech input key 216 has not been pressed down (S105: No), the control unit 100 determines whether the user has performed a horizontal movement operation, such as, for example, pressing down the direction key 212, or the like (S106). If it is determined that a horizontal movement operation has been performed (S106: Yes), the information processing device 10 performs a "select/modify process" described below (S107). Thereafter, the information processing device 10 performs the operation of S106 again.

Meanwhile, if it is determined that a horizontal movement operation has not been performed (S106: No), the control unit 100 determines whether the user has pressed down the decision key 214 (S108). If it is determined that the decision key 214 has been pressed down (S108: Yes), the text editing unit 108 confirms the text string input by the user (S109). Thereafter, the information processing device 10 ends the process.

Meanwhile, if it is determined that the decision key 214 has not been pressed down (S108: No), the control unit 100 performs the operation of S106 again.

### - Select/Modify Process -

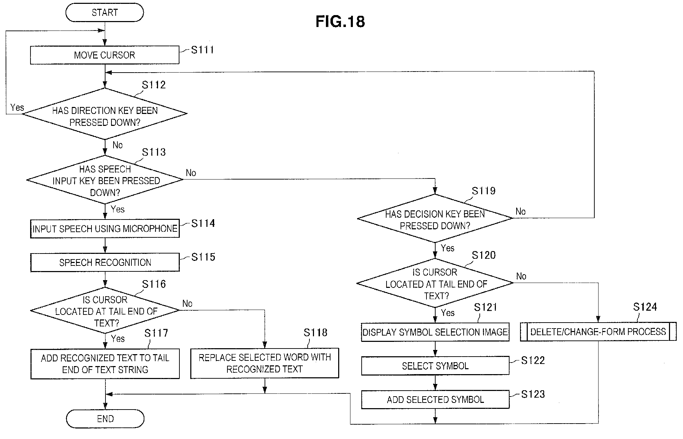

Next, an operation of the "select/modify process" in S107 will be described with reference to FIG. 18. As shown in FIG. 18, initially, the display control unit 110 of the information processing device 10 moves the cursor over one selected text candidate on the basis of a choice between the directions of a movement of the cursor input by the user (S111).

Next, the control unit 100 monitors the state of reception performed by the communication unit 120, and determines whether the user has performed a horizontal movement operation again (S112). If it is determined that a horizontal movement operation has been performed again (S112: Yes), the information processing device 10 performs the operation of S111 again.

Meanwhile, if it is determined that a horizontal movement operation has not been performed (S112: No), the control unit 100 determines whether the user has newly pressed down the speech input key 216 (S113).

If it is determined that the speech input key 216 has been newly pressed down (S113: Yes), the display control unit 110 causes the display screen 40 to display a message for prompting the user to input their speech. Thereafter, the user inputs their speech into the speech input unit 202 (S114).

Next, the speech recognition unit 102 recognizes speech data received from the controller 20 using a speech recognition technique (S115).

Next, the control unit 100 determines whether the cursor is located at the tail end of the text string (S116). If the cursor is located at the tail end of the text string (S116: Yes), the text addition unit 112 adds text data recognized by the speech recognition unit 102 as a second text string to the tail end of the text string (S117). Meanwhile, if the cursor is located at a position other than the tail end of the text string (S116: No), the text editing unit 108 determines that the text data recognized by the speech recognition unit 102 is modified text, and then replaces a selected text candidate corresponding to the position of the cursor with the modified text in the text string (S118).

If it is determined in S113 that the speech input key 216 has not been pressed down (S113: No), the control unit 100 determines whether the user has newly pressed down the decision key 214 (S119). If it is determined that the decision key 214 has not been pressed down (S119: No), the control unit 100 performs the operation of S 112 again.

Meanwhile, if it is determined that the decision key 214 has been pressed down (S119: Yes), the control unit 100 determines whether the cursor is located at the tail end of the text string (S120).

If the cursor is located at the tail end of the text string (S120: Yes), initially, the display control unit 110 causes the display screen 40 to display the symbol selection image (S121). Next, the user selects, from the symbol selection image, a symbol that the user desires to add to the position of the cursor, i.e., the tail end of the text string (S122). Thereafter, the text addition unit 112 adds the symbol selected in S122 to the tail end of the text string (S123).

Meanwhile, if the cursor is located at a position other than the tail end of text string (S120: No), the information processing device 10 performs an operation of a "delete/change-form process" described below (S124).

### - Delete/Change-Form Process -

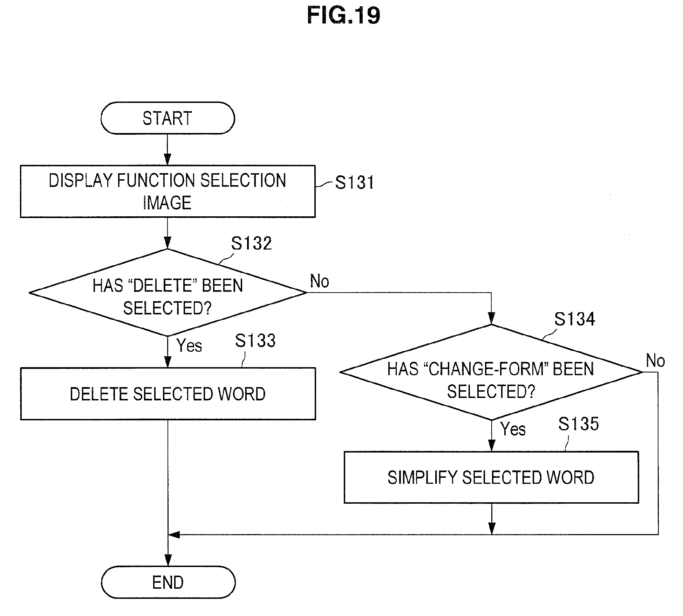

Next, an operation of the "delete/change-form process" in S124 will be described in detail with reference to FIG. 19. As shown in FIG. 19, initially, the display control unit 110 of the information processing device 10 causes the display screen 40 to display the function selection image (S131).

If the user has selected the "delete" function in the function selection image (S132: Yes), the text editing unit 108 deletes a selected text candidate corresponding to the position of the cursor from the text string (S133).

Meanwhile, if the user has selected the "change-form" function in the function selection image (ski32: No, S134: Yes), the text editing unit 108 simplifies the selected text candidate corresponding to the position of the cursor, such as, for example, replacing the selected text candidate with text that is obtained by converting the selected text candidate into the infinitive form, or the like (S135).

If none of the "delete" function and the "change form" has been selected by the user in the function selection image (S134: No), the information processing device 10 ends the operation of the "delete/change-form process."

In the foregoing, the operation example 1 has been described. According to the operation example 1, the function selection image is displayed in the "delete/change-form process," and therefore, the user can explicitly select the effect of editing of a text string, such as, for example, deletion, simplification, or the like, in the function selection image, and can be prevented from selecting a wrong effect of editing.

### (2-1-3-2. Operation Example 2)

### - General Operation -

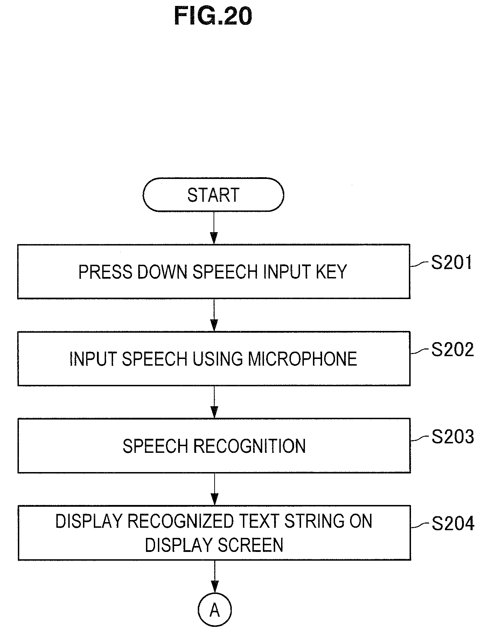

Next, the operation example 2 will be described. FIG. 20 is a flowchart showing a portion of a general operation according to the operation example 2. Note that operations of S201-S204 shown in FIG. 20 are similar to the operations of S101-S104 in the operation example 1, and therefore, will not be described herein.

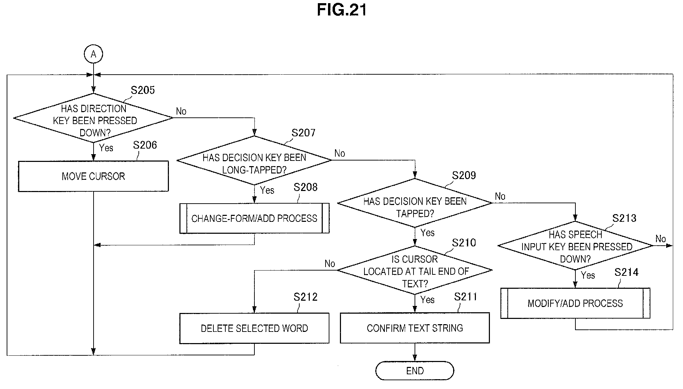

Next, operations following S204 will be described with reference to FIG. 21. As shown in FIG. 21, initially, the control unit 100 of the information processing device 10 monitors the state of reception performed by the communication unit 120, and determines whether the user has performed a horizontal movement operation (S205). If it is determined that a horizontal movement operation has been performed (S205: Yes), the display control unit 110 moves the cursor over one selected text candidate on the basis of a choice between the directions of a movement input by the user (S206). Therefore, the information processing device 10 performs the operation of S205 again.

Meanwhile, if it is determined that a horizontal movement operation has not been performed (S205: No), the control unit 100 determines whether the user has long-tapped the decision key 214 (S207). If the decision key 214 determines that the user has long-tapped the decision key 214 (S207: Yes), the information processing device 10 performs an operation of a "change-form/add process" described below (S208). Thereafter, the information processing device 10 performs the operation of S205 again.

Meanwhile, if it is determined that the decision key 214 has been (ordinarily) tapped (S207: No, S209: Yes), the control unit 100 determines whether the cursor is located at the tail end of the text string (S210).

If the cursor is located at the tail end of the text string (S210: Yes), the text editing unit 108 confirms the text string input by the user (S211). Thereafter, the information processing device 10 ends the process.

Meanwhile, if the cursor is located at a position other than the tail end of the text string (S210: No), the text editing unit 108 deletes a selected text candidate corresponding to the position of the cursor from the text string (S212). Thereafter, the information processing device 10 performs the operation of 205 again.

If it is determined in S209 that the decision key 214 has not been tapped (S209: No), the control unit 100 determines whether the user has pressed down the speech input key 216 (S213). If it is determined that the speech input key 216 has been pressed down (S213: Yes), the information processing device 10 performs an operation of a "modify/add process" described below (S214). Meanwhile, if it is determined that the speech input key 216 has not been pressed down (S213: No), the information processing device 10 performs the operation of S205 again.

### - Change-Form/Add Process-

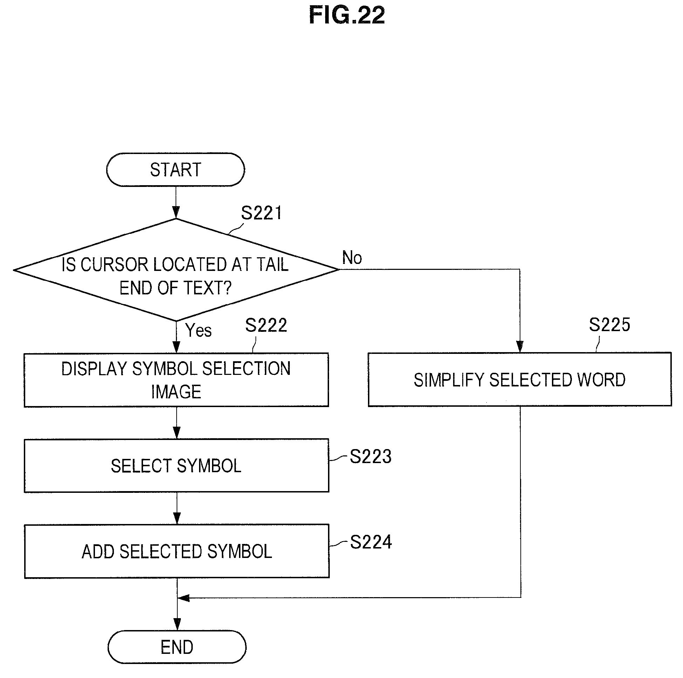

Next, an operation of the "change-form/add process" in S208 will be described in detail with reference to FIG. 22. As shown in FIG. 22, initially, the control unit 100 of the information processing device 10 determines whether the cursor is located at the tail end of the text string (S221). If the cursor is located at the tail end of the text string (S221: Yes), the information processing device 10 performs operations of S222-S224. Note that the operations of S222-S224 are similar to the operations of S121-S123 in the operation example 1.

Meanwhile, if the cursor is located at a position other than the tail end of the text string (S221: No), the text editing unit 108 simplifies a selected text candidate corresponding to the position of the cursor, as in S135 in the operation example 1 (S225).

### - Modify/Add Process -

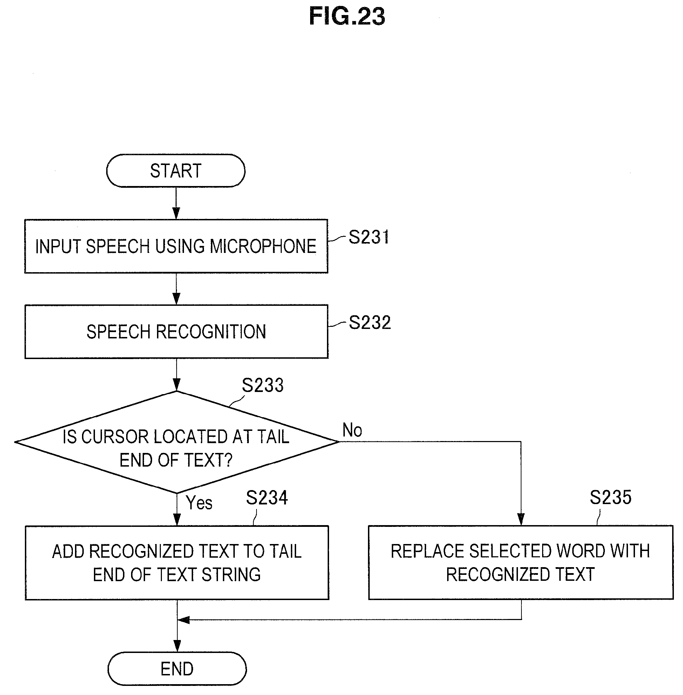

Next, an operation of the "modify/add process" in S214 will be described with reference to FIG. 23. Note that operations of S231-S235 shown in FIG. 23 are similar to the operations of S114-S118 in the operation example 1, and therefore, will not be described herein.

In the foregoing, the operation example 2 has been described. In the operation example 2, the user can select the effect of editing of a text string by long-tapping or tapping the decision key 214. Therefore, the user can edit a text string by performing a more intuitive operation (compared to the operation example 1).

Also, in the operation example 2, the user switches the process to the "change-form/add process" for modification by overwriting or simplification of a text string, which is triggered by the decision key 214 being long-tapped. Therefore, advantageously, the user can more easily understand in what state the process is during editing.

### (2-1-4. Effects)

Thus, as described with reference to, for example, FIG. 8, FIG. 17 to FIG. 23 and the like, the information processing device 10 according to the first embodiment initially segments an input text string into a plurality of selected text candidates. Thereafter, the information processing device 10 designates a selected text candidate to be selected by the user, of the plurality of selected text candidates obtained by the segmentation, according to the user's operation of inputting the direction of a movement for moving the cursor on the display screen. Thereafter, the information processing device 10 edits the selected text candidate thus designated, on the basis of input information input by the user. Therefore, the user can easily edit an input text string.

For example, the user can move the cursor on a selected text candidate-by-selected text candidate basis, i.e., on a character string-by-character string basis where a character string is a grammatical or meaningful unit, by operating the controller 20 and thereby choosing between the directions of a movement of the cursor. Therefore, the user can designate a position of text that the user desires to modify, with less time and effort. Also, after selecting text that the user desires to modify, the user can overwrite and modify the selected text candidate into a desired string of characters, for example, by pressing down the speech input key 216 of the controller 20 and then inputting the user's speech into the speech input unit 202. Thus, the user can edit text to be modified, by a simple operation.

Also, the controller 20 can be implemented by a simple device that includes, as operation keys, only the direction keys 212, the decision key 214, and the speech input key 216, for example. Therefore, the user can simply perform a desired operation without dithering over which operation key the user should press down, for example. Also, the controller 20 can be configured in small size and at low cost.

### <2-2. Second Embodiment>

In the foregoing, the first embodiment has been described. As described above, in the first embodiment, the user can enter, for example, an input for choosing between the directions of a movement of the cursor, an input for deciding various effects of editing, and the like, by operating the controller 20. As described above, according to the second embodiment, the user can enter these inputs in a handsfree manner without using the controller 20.

### (2-2-1. Basic Configuration)

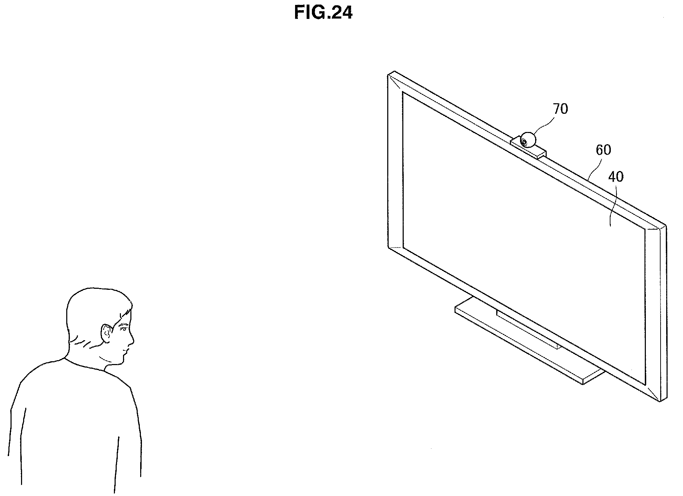

Initially, a basic configuration of an information processing system according to the second embodiment will be described with reference to FIG. 24. As shown in FIG. 24, the information processing system according to the second embodiment includes a television set 60 and a camera 70.

### (2-2-1-1. Television Set 60)

The television set 60 is an example of the information processing device in the present disclosure. The television set 60 is a device that can display the display screen 40. Also, as in the information processing device 10 according to the first embodiment, software for editing text can be installed in the television set 60. Also, the television set 60 can have a function of picking up speech using an input device 160 included in the television set 60, and then recognizing the speech thus picked up.

Note that the television set 60 has a hardware configuration generally similar to that of the information processing device 10 according to the first embodiment shown in FIG. 4. Note that the present disclosure is not limited to the configuration. For example, the television set 60 may not include the storage device 164.

### (2-2-1-2. Camera 70)

The camera 70 has a function of imaging an external video on an image sensor, such as, for example, a charge coupled device (CCD), complementary metal oxide semiconductor (CMOS), or the like, through a lens, and thereby capturing a still image or a moving image. For example, the camera 70 captures an image of the user or an object located in front of the lens.

Also, the camera 70 can transmit the captured image to the television set 60 via wired communication or wireless communication.

Note that the information processing system according to the second embodiment is not limited to the above configuration. For example, the television set 60 and the camera 70 may be integrated together, such as the camera 70 being included in the television set 60, or the like.

### (2-2-2. Configuration)

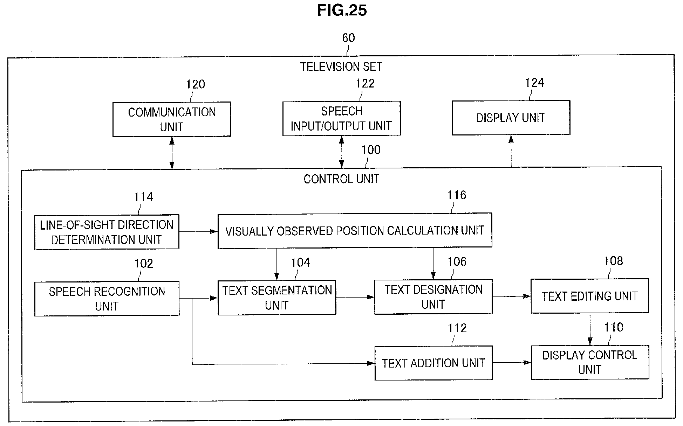

In the foregoing, a basic configuration of the information processing system according to the second embodiment has been described. Next, a configuration of the television set 60 according to the second embodiment will be described in detail. FIG. 25 is a functional block diagram showing a configuration of the television set 60. As shown in FIG. 25, the television set 60 has a control unit 100, a communication unit 120, a speech input/output unit 122, and a display unit 124. Note that the speech recognition unit 102, the text segmentation unit 104, the text editing unit 108, the display control unit 110, and the text addition unit 112 have functions similar to the respective corresponding functions of the first embodiment.

### (2-2-2-1. Control Unit 100)

The control unit 100 according to the second embodiment is different from the first embodiment in that the former additionally has a line-of-sight direction determination unit 114 and a visually observed position calculation unit 116. Note that the other functions of the control unit 100 are generally similar to those of the first embodiment.

### (2-2-2-2. Text Designation Unit 106)

The text designation unit 106 according to the second embodiment designates selected text from a plurality of selected text candidates obtained by segmentation performed by the text segmentation unit 104, on the basis of a movement of the direction of the user's line of sight determined by the line-of-sight direction determination unit 114. For example, the text designation unit 106 designates, as selected text, a selected text candidate located at a position which is visually observed by the user on the display screen 40 and is calculated by the visually observed position calculation unit 116 described below.

### (2-2-2-3. Line-Of-Sight Direction Determination Unit 114)

### - A. Determination Of Position Of User's Eye -

The line-of-sight direction determination unit 114 can determine the position of the user's eye on the basis of an image captured by the camera 70. For example, the line-of-sight direction determination unit 114 initially detects the user's face by extracting features, such as, for example, an eye(s), nose, or outline, from an image captured by the camera 70. Thereafter, the line-of-sight direction determination unit 114 calculates a relative position from the camera 70 to the user's eye on the basis of, for example, a distance between the user's eyes thus detected, the size of the user's face, or the like.

### - B. Determination Of Direction Of User's Line Of Sight -

Moreover, the line-of-sight direction determination unit 114 can determine the direction of the user's line of sight on the basis of an image captured by the camera 70. For example, the line-of-sight direction determination unit 114 determines the direction of the user's line of sight by performing pattern matching with respect to an image of the user's eye detected from an image captured by the camera 70.

Note that, as a specific determination technique, the following technique is applicable, for example. Initially, a certain image processing device is used to perform machine learning using captured images of entire eyes of a plurality of persons associated with the directions of their lines of sight, thereby creating dictionary data for pattern matching. Thereafter, the line-of-sight direction determination unit 114 compares a feature amount related to the user's eye that is detected from an image captured by the camera 70, with the above dictionary data, to determine the direction of the user's line of sight. Note that the above image processing device may be the television set 60 or a different device.

### (2-2-2-4. Visually Observed Position Calculation Unit 116)

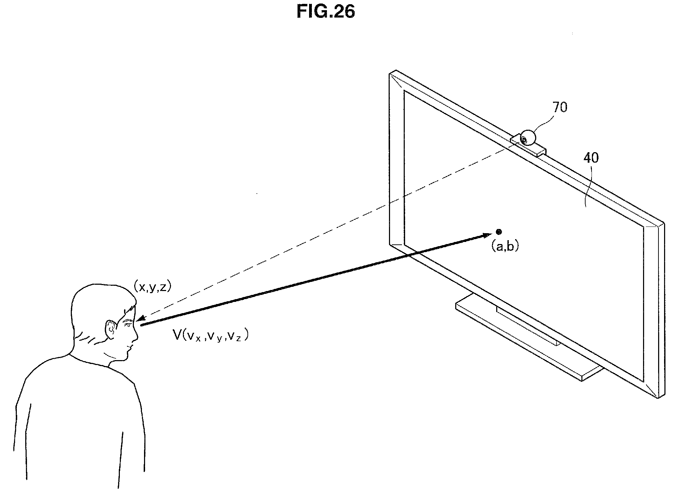

The visually observed position calculation unit 116 calculates a position visually observed by the user on the display screen 40 on the basis of the position of the user's eye and the direction of the user's line of sight that are determined by the line-of-sight direction determination unit 114. Here, the visually observed position is a position viewed by the user on the display screen 40, or a region in the vicinity of the viewed position, such as, for example, the position of a coordinate point (a, b) shown in FIG. 26.

For example, as shown in FIG. 26, the visually observed position calculation unit 116 calculates the position of an intersection between a half-line extended from the position (x, y, z) of the user's eye in the direction V (vx, vy, vz) of the user's line of sight, and the display screen 40, which is defined as the visually observed position.

### (2-2-2-5. Communication Unit 120)

The communication unit 120 according to the second embodiment transmits and receives information to and from various apparatuses that can communicate with the television set 60. For example, the communication unit 120 receives, from the camera 70, an image captured by the camera 70.

### (2-2-2-6. Speech Input/Output Unit 122)

The speech input/output unit 122 includes a speech input device, such as a microphone or the like, and a speech output device, such as a speaker or the like. For example, the speech input/output unit 122 picks up an external speech, or converts speech data generated by the television set 60 into a speech and outputs the speech.

### (2-2-2-7. Display Unit 124)

The display unit 124 displays, for example, a text string input by the user on the display screen 40 under the control of the display control unit 110.

Note that the configuration of the television set 60 according to the second embodiment is not limited to the above configuration. For example, the communication unit 120 may not be included in the television set 60, and may be included in another apparatus. Also, when the television set 60 and the camera 70 are integrated together, the television set 60 may not include the communication unit 120.

### (2-2-3. Operations)

In the foregoing, the configuration according to the second embodiment has been described. Next, operations according to the second embodiment will be described. Note that, here, as an example, an operation example corresponding to the "operation example 2" according to the first embodiment will be described. Also, in the following description, an example is assumed in which a "microphone icon" that is an icon having the shape of a microphone is displayed at a predetermined position, such as, for example, a lower left portion, on the display screen 40.

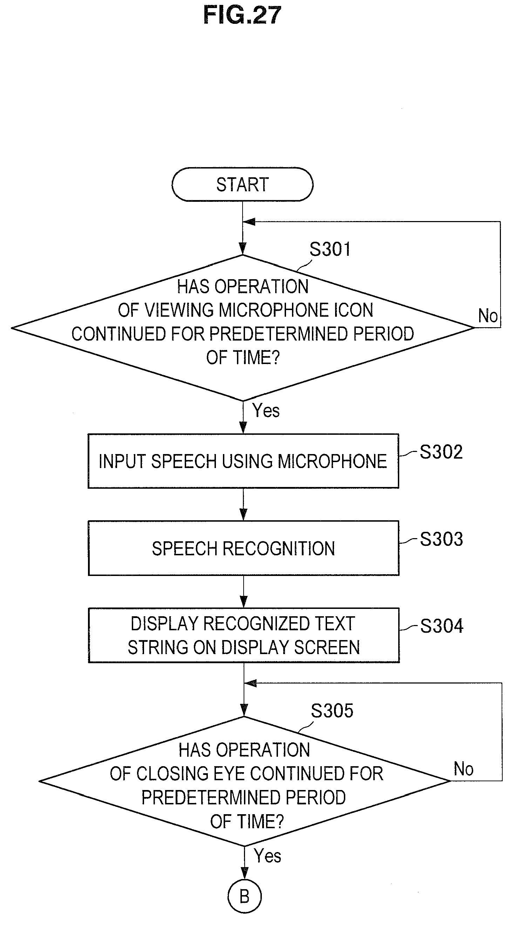

FIG. 27 is a flowchart showing a portion of a general operation according to the second embodiment. As shown in FIG. 27, initially, the line-of-sight direction determination unit 114 of the television set 60 determines the position of the user's eye and the direction of the user's line of sight on the basis of an image captured by the camera 70. Thereafter, the visually observed position calculation unit 116 calculates a position visually observed by the user on the display screen 40 on the basis of the position of the user's eye and the direction of the user's line of sight that have been determined by the line-of-sight direction determination unit 114. Thereafter, on the basis of the result of the calculation by the visually observed position calculation unit 116, the control unit 100 monitors whether the user's operation of viewing the microphone icon displayed on the display screen 40 has continued for at least a predetermined period of time (S301).

If the operation of viewing the microphone icon has continued for at least the predetermined period of time (S301: Yes), the display control unit 110 causes the display screen 40 to display a message for prompting the user to input their speech. Thereafter, the user inputs their speech into the speech input/output unit 122 (S302).

Next, the speech recognition unit 102 recognizes speech data received by the speech input/output unit 122, using a speech recognition technique. Thereafter, the text segmentation unit 104 segments a text string recognized by the speech recognition unit 102 into a plurality of selected text candidates (S303).

Next, the display control unit 110 causes the display screen 40 to display the text string recognized by the speech recognition unit 102 (S304).

Next, the line-of-sight direction determination unit 114 determines whether the user has performed an operation of closing their eye, on the basis of an image captured by the camera 70. Thereafter, on the basis of the result of the determination by the line-of-sight direction determination unit 114, the control unit 100 monitors whether the user's operation of closing their eye has continued for at least a predetermined period of time (S305).

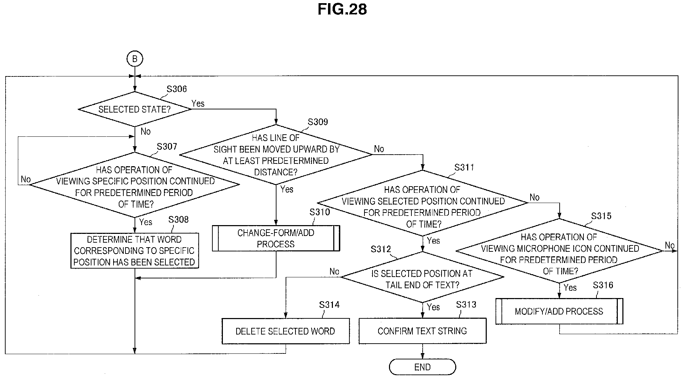

Next, operations following S305 will be described with reference to FIG. 28. If the operation of closing an eye has continued for at least the predetermined period of time (S305: Yes), the control unit 100 determines whether any of the plurality of selected text candidates has been selected (S306). Note that it is assumed that, in the initial state, none of the selected text candidates has been selected.

If none of the selected text candidates has been selected (S306: No), the control unit 100 monitors whether the operation of viewing a specific position on the display screen 40 has continued for at least a predetermined period of time, on the basis of the result of the calculation by the visually observed position calculation unit 116 (S307). Thereafter, if the operation of viewing a specific position has continued for at least the predetermined period of time (S307: Yes), the text designation unit 106 determines that a selected text candidate corresponding to the position viewed by the user has been selected. Note that if the user is viewing the tail end of the text string, it is determined that the tail end of the text string has been selected. Next, the display control unit 110 causes the display screen 40 to display the cursor at the position of the selected text candidate or the tail end of text that has been selected (also hereinafter referred to as a selected position) (S308). Thereafter, the television set 60 performs the operation of S306 again.

If, in S306, any selected text candidate (or the tail end of text) has been selected (S306: Yes), the control unit 100 monitors a change in the position visually observed by the user, on the basis of the result of the calculation by the visually observed position calculation unit 116 (S309, S311, S315).

### -S309-

If the position visually observed by the user has been moved by at least a predetermined distance (S309: Yes), the television set 60 performs an operation of a "change-form/add process" which is generally similar to that of S208 in the first embodiment (S310). Thereafter, the television set 60 performs the operation of S306 again.

### -S311-

Meanwhile, if the user's operation of viewing the selected position has continued for at least the predetermined period of time (S311: Yes), the control unit 100 determine whether the selected position is the tail end of the text (S312). If the selected position is the tail end of the text (S312: Yes), the text editing unit 108 confirms the text string input by the user (S313). Thereafter, the information processing device 10 ends the process.

If the selected position is not the tail end of the text (S312: No), the text editing unit 108 removes the selected text candidate which has been selected, from the text string (S314). Thereafter, the information processing device 10 performs the process of S306 again.

### -S315-

Meanwhile, if the operation of viewing the microphone icon displayed on the display screen 40 has continued for at least the predetermined period of time (S315: Yes), the television set 60 performs an operation of a "modify/add process" which is generally similar to S214 in the first embodiment (S316). Thereafter, the television set 60 performs the operation of S306 again.

### (2-2-4. Effects)

Thus, as described with reference to, for example, FIG. 25, FIG. 27, FIG. 28, and the like, the television set 60 according to the second embodiment designates a selected text candidate to be selected by the user, of a plurality of selected text candidates obtained by segmenting an input text string, on the basis of a movement of the direction of the user's line of sight. Thereafter, the television set 60 edits the designated selected text candidate on the basis of a movement of the user's line of sight or the user's speech. Therefore, the user can both select and edit text in a handsfree manner without using the controller 20. Also, for example, it is not necessary to continue to hold the controller 20, resulting in a reduction in the load on the user's operation during editing of text.

Also, for example, the television set 60 causes the user to input their speech when the user has viewed the microphone icon for at least a predetermined period of time, or to delete selected text when the user has viewed a selected position for at least a predetermined period of time. Thus, the processes are switched according to the position on the display screen 40 and the elapsed time, and therefore, the user can operate as the user intends only by moving their line of sight.

### «3. Modified Examples»

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, the keys included in the controller 20 can be configured as software that provides the functions of the keys instead of the hardware configuration. When the information processing device 10 according to the first embodiment is a device having a touchscreen, such as, for example, a smartphone, then if the above software is further installed therein, the information processing device 10 and the controller 20 can be integrated together.

Also, according to each embodiment of the present disclosure, it is possible to provide a computer program for causing hardware such as the CPU 150, the ROM 152, the RAM 154, and the like to perform functions similar to those of the configurations of the information processing device 10 or the television set 60. Also, a recording medium storing the computer program is also provided.

Additionally, the present technology may also be configured as below.
(1) An information processing device including:
   a text segmentation unit configured to segment an input text string into a plurality of first portions of text;
   a text designation unit configured to designate a first portion of text to be selected by a user, of the plurality of first portions of text obtained by the segmentation, on the basis of the user's operation of inputting a direction of a movement for moving a pointing position on a display screen on which the text string is displayed; and
   a text editing unit configured to edit the designated first portion of text on the basis of input information input by the user.
(2) The information processing device according to (1),
   wherein the input information input by the user contains second text input by the user, and
   wherein the text editing unit, when the user inputs the second text, replaces the first portion of text designated by the text designation unit with the second text in the text string.
(3) The information processing device according to (2),
   wherein the second text contains text determined by speech recognition being performed on a speech uttered by the user.
(4) The information processing device according to any one of (1) to (3),
   wherein the input information input by the user contains deletion instruction information for deleting text, and
   wherein the text editing unit, when the user inputs the deletion instruction information, deletes the first portion of text designated by the text designation unit from the text string.
(5) The information processing device according to any one of (1) to (5),
   wherein the input information input by the user contains conversion instruction information for converting a word into an infinitive form, and
   wherein the text editing unit, when the user inputs the conversion instruction information, replaces the first portion of text designated by the text designation unit with text obtained by converting the first portion of text into an infinitive form.
(6) The information processing device according to any one of (1) to (4),
   wherein the input information input by the user contains conversion instruction information for converting kanji into hiragana, and
   wherein the text editing unit, when the user inputs the conversion instruction information, replaces the first portion of text designated by the text designation unit with text obtained by converting the first portion of text into hiragana.
(7) The information processing device according to any one of (1) to (6),
   wherein the input text string contains a text string determined by speech recognition being performed on a speech uttered by the user.
(8) The information processing device according to any one of (1) to (6), further including:
   a text addition unit configured to, when the pointing position is located at a tail end of the text string, and a predetermined operation is performed, add a second text string to the tail end of the text string.
(9) The information processing device according to (8), further including:
   a display control unit configured to, when the predetermined operation is performed, cause the display screen to display a selection image for allowing the user to select one or more symbols,
   wherein the text addition unit adds the one or more symbols selected by the user in the selection image, as the second text string, to the tail end of the text string.
(10) The information processing device according to (8),
   wherein the text addition unit adds a text string determined by speech recognition being performed on a speech uttered by the user, as the second text string, to the tail end of the text string.
(11) The information processing device according to any one of (1) to (10),
   wherein the text segmentation unit segments the text string into the plurality of first portions of text on the basis of context of the text string.
(12) The information processing device according to any one of (1) to (11),
   wherein the first portion of text includes one or more words.
(13) The information processing device according to any one of (1) to (12),
   wherein the user's operation of inputting the direction of the movement includes the user's operation of selecting a direction key for moving the pointing position on the display screen.
(14) The information processing device according to any one of (1) to (13), further including:
   a line-of-sight direction determination unit configured to determine a direction of the user's line of sight,
   wherein the user's operation of inputting the direction of the movement includes a movement of the direction of a line of sight performed by the user.
(15) An information processing method including:
   segmenting an input text string into a plurality of first portions of text;
   designating a first portion of text to be selected by a user, of the plurality of first portions of text obtained by the segmentation, on the basis of the user's operation of inputting a direction of a movement for moving a pointing position on a display screen on which the text string is displayed; and
   editing, by a processor, the designated first portion of text on the basis of input information input by the user.
(16) A program for causing a computer to function as:
   a text segmentation unit configured to segment an input text string into a plurality of first portions of text;
   a text designation unit configured to designate a first portion of text to be selected by a user, of the plurality of first portions of text obtained by the segmentation, on the basis of the user's operation of inputting a direction of a movement for moving a pointing position on a display screen on which the text string is displayed; and
   a text editing unit configured to edit the designated first portion of text on the basis of input information input by the user.

### Reference Signs List

- 10: information processing device
- 20: controller
- 30: display device
- 60: television set
- 70: camera
- 100: control unit
- 102: speech recognition unit
- 104: text segmentation unit
- 106: text designation unit
- 108: text editing unit
- 110: display control unit
- 112: text addition unit
- 114: line-of-sight direction determination unit
- 116: visually observed position calculation unit
- 120: communication unit
- 122: speech input/output unit
- 124: display unit
- 150: CPU
- 152: ROM
- 154: RAM
- 156: internal bus
- 158: interface
- 160: input device
- 162: output device
- 164: storage device
- 166: communication device
- 200: communication unit
- 202: microphone
- 202: speech input unit
- 210: operation unit
- 212: direction key
- 214: decision key
- 216: speech input key
- 220: rotational key

## Claims

1. An information processing device comprising:
a text segmentation unit configured to segment an input text string into a plurality of first portions of text;
a text designation unit configured to designate a first portion of text to be selected by a user, of the plurality of first portions of text obtained by the segmentation, on the basis of the user's operation of inputting a direction of a movement for moving a pointing position on a display screen on which the text string is displayed; and
a text editing unit configured to edit the designated first portion of text on the basis of input information input by the user.

2. The information processing device according to claim 1,
wherein the input information input by the user contains second text input by the user, and
wherein the text editing unit, when the user inputs the second text, replaces the first portion of text designated by the text designation unit with the second text in the text string.

3. The information processing device according to claim 2,
wherein the second text contains text determined by speech recognition being performed on a speech uttered by the user.

4. The information processing device according to claim 1,
wherein the input information input by the user contains deletion instruction information for deleting text, and
wherein the text editing unit, when the user inputs the deletion instruction information, deletes the first portion of text designated by the text designation unit from the text string.

5. The information processing device according to claim 1,
wherein the input information input by the user contains conversion instruction information for converting a word into an infinitive form, and
wherein the text editing unit, when the user inputs the conversion instruction information, replaces the first portion of text designated by the text designation unit with text obtained by converting the first portion of text into an infinitive form.

6. The information processing device according to claim 1,
wherein the input information input by the user contains conversion instruction information for converting kanji into hiragana, and
wherein the text editing unit, when the user inputs the conversion instruction information, replaces the first portion of text designated by the text designation unit with text obtained by converting the first portion of text into hiragana.

7. The information processing device according to claim 1,
wherein the input text string contains a text string determined by speech recognition being performed on a speech uttered by the user.

8. The information processing device according to claim 1, further comprising:
a text addition unit configured to, when the pointing position is located at a tail end of the text string, and a predetermined operation is performed, add a second text string to the tail end of the text string.

9. The information processing device according to claim 8, further comprising:
a display control unit configured to, when the predetermined operation is performed, cause the display screen to display a selection image for allowing the user to select one or more symbols,
wherein the text addition unit adds the one or more symbols selected by the user in the selection image, as the second text string, to the tail end of the text string.

10. The information processing device according to claim 8,
wherein the text addition unit adds a text string determined by speech recognition being performed on a speech uttered by the user, as the second text string, to the tail end of the text string.

11. The information processing device according to claim 1,
wherein the text segmentation unit segments the text string into the plurality of first portions of text on the basis of context of the text string.

12. The information processing device according to claim 1,
wherein the first portion of text includes one or more words.

13. The information processing device according to claim 1,
wherein the user's operation of inputting the direction of the movement includes the user's operation of selecting a direction key for moving the pointing position on the display screen.

14. The information processing device according to claim 1, further comprising:
a line-of-sight direction determination unit configured to determine a direction of the user's line of sight,
wherein the user's operation of inputting the direction of the movement includes a movement of the direction of a line of sight performed by the user.

15. An information processing method comprising:
segmenting an input text string into a plurality of first portions of text;
designating a first portion of text to be selected by a user, of the plurality of first portions of text obtained by the segmentation, on the basis of the user's operation of inputting a direction of a movement for moving a pointing position on a display screen on which the text string is displayed; and
editing, by a processor, the designated first portion of text on the basis of input information input by the user.

16. A program for causing a computer to function as:
a text segmentation unit configured to segment an input text string into a plurality of first portions of text;
a text designation unit configured to designate a first portion of text to be selected by a user, of the plurality of first portions of text obtained by the segmentation, on the basis of the user's operation of inputting a direction of a movement for moving a pointing position on a display screen on which the text string is displayed; and
a text editing unit configured to edit the designated first portion of text on the basis of input information input by the user.
